(19) Europäisches Patentamt
European Patent Office
Office européen des brevets

(11) Publication number: **0 283 916 B1**

(12) **EUROPEAN PATENT SPECIFICATION**

(45) Date of publication of patent specification: **29.12.93** (51) Int. Cl.$^5$: **G02F 1/137**

(21) Application number: **88104176.8**

(22) Date of filing: **16.03.88**

(54) **Liquid crystal light-modulating device imparted with memory effect and display unit utilizing same.**

(30) Priority: **20.03.87 JP 63877/87**

(43) Date of publication of application:
**28.09.88 Bulletin 88/39**

(45) Publication of the grant of the patent:
**29.12.93 Bulletin 93/52**

(84) Designated Contracting States:
**DE FR GB**

(56) References cited:
**EP-A- 0 032 362**
**EP-A- 0 259 761**

**JAPANESE JOURNAL OF APPLIED PHYSICS, vol. 25, no. 10, October 1986, pages L846-L847; K. OKANO: "Electrostatic contribution to the distortion free energy density of ferroelectric liquid crystals"**

**JAPANESE JOURNAL OF APPLIED PHYSICS, vol. 25, no. 5, part 2, May 1986, pages L416-L418; K. YOSHINO et al.: "Low threshold field of electro-optic effect in ferroelectric liquid crystal with extremely large spontaneous polarization"**

(73) Proprietor: **HITACHI, LTD.**
**6, Kanda Surugadai 4-chome**
**Chiyoda-ku, Tokyo 101(JP)**

(72) Inventor: **Kondo, Katsumi**
**19-3-401, Ishinazakacho-1-chome**
**Hitachi-shi(JP)**
Inventor: **Yokokura, Hisao**
**10-1, Higashinarusawacho-2-chome**
**Hitachi-shi(JP)**
Inventor: **Kitamura, Teruo**
**3600-234, Nakane**
**Katsuta-shi(JP)**
Inventor: **Hanawa, Yasuo**
**45-12, Taiseicho**
**Katsuta-shi(JP)**
Inventor: **Iwasaki, Kishiro**
**1288, Kamezakucho**
**Hitachiota-shi(JP)**
Inventor: **Nakata, Tadao**
**212-123, Koya**
**Katsuta-shi(JP)**
Inventor: **Isogai, Masato**
**1378-21, Senbacho**
**Mito-shi(JP)**
Inventor: **Mukoh, Akio**
**498-21, Kasaharacho**
**Mito-shi(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

(74) Representative: **Strehl Schübel-Hopf Groening & Partner**
**Maximilianstrasse 54**
**D-80538 München (DE)**

## Description

FIELD OF THE INVENTION AND RELATED ART STATEMENT

FIELD OF THE INVENTION:

This invention relates to a light-modulating device with a ferroelectric liquid crystal composition. More particularly, it relates to a device which controls the quantity of light passing through the device by the external voltage application and is utilizable in a display unit, light shutter unit, or the like.

RELATED ARTS:

It has been well known that when a ferroelectric liquid crystal is confined in a cell of 1 to 2 µm in thickness, there is developed an electro-optical memory effect [Japanese Patent Application "Kokai" (Laid-open) No. 56-107,216, USP 4,367,924, CH 647,337, EP No. 32,362, and Appl. Phys. Lett., 36 (1980), pp. 899-901]. As a means to develop the memory effect by using a thicker cell, there is proposed a method employing a compound having a large tilt angle and capable of transition from a cholesteric phase (Ch) directly to a smectic phase (Sc*) (Japan Display-86, Lecture No. 12.5).

However, in order to orientate the above material having a Ch-Sc* phase sequence, it is necessary to cool the material slowly from Ch to Sc* under application of a direct current voltage. In the thus obtained device, when a voltage of the same polarity as that of the orientation voltage is applied during orientation process, the threshold voltage becomes lower compared with the case of opposite polarity and the threshold characteristics become asymmetric; as a consequence, the range of adaptable driving voltages becomes narrower due to development of said asymmetry. Especially in case the asymmetry is marked, it becomes necessary to apply a direct current bias, resulting in a remarkable decrease in the life of device. Moreover, the increase in driving voltage is not negligible among the problems arose from the thick cell.

SUMMARY OF THE INVENTION

The present invention relates to a ferroelectric liquid crystal light-modulating device comprising:
a first and a second base plate at least one of which is transparent arranged substantially parallel and opposite to each other, leaving a gap between each other,
a transparent electrode structure deposited on the inward facing surface of each of said first and second base plates;
a ferroelectric liquid crystal composition in the chiral smectic C ($S_c^*$) phase confined between said first and second base plates, said liquid crystal composition exhibiting a smectic A phase in a temperature range directly above the temperature range of the chiral smectic C phase;
a polariser deposited on the outward looking surface of said transparent base plate;
characterized in that
the deformation constant B1 of the C-director in the liquid crystal layer is larger than or equal to $1.0 \times 10^{-10}$ N and the value of the spontaneous polarisation is larger than $3.2 \times 10^{-4}$ C/m$^2$,
such that when no electric field is applied said liquid crystal layer forms three layers parallel to said surfaces of the base plates, the liquid crystal molecules in each of the outer layers being disposed substantially in parallel with said surfaces.

The ferroelectric liquid crystal light-modulating device of the present invention has the capability of exhibiting a stable memory effect even in a thick cell having a gap of 3 µm or more.

Furthermore, the ferroelectric liquid crystal light-modulating device according to the invention has symmetric threshold characteristics and a memory effect,
the capability of being operated by a low driving voltage and exhibiting a memory effect.

As a further aspect of the invention a display device utilizing the above-mentioned ferroelectric liquid crystal light-modulating element has to be mentioned.

The characteristic that the light modulating device exhibits a stable memory effect in a thick cell is achieved by employing as the ferroelectric liquid crystal a liquid crystal composition having an elastic constant, $B_1$, defined by the formula

$$B_1 > 1.0 \times 10^{-10} N$$

wherein $B_1$ is an elastic constant in the deformation (splayed deformation and bend deformation) of C-director in the layer consisting of a ferroelectric liquid crystal molecule. According to the results of an extensive study carried out by the present inventors, there exists a correlation between the elastic constant $B_1$ and the spontaneous polarization Ps; in order to conform to the above formula, the value of spontaneous polarization Ps should meet the requirement

$$Ps > 3.2 \times 10^{-4}\, C/m^2.$$

The feature of exhibiting a memory effect and symmetric threshold characteristics, can be obtained by using as the ferroelectric liquid crystal composition a ferroelectric liquid crystal composition having a $S_A$-$S_C$* sequence.

The capability of being operated by a low driving voltage and exhibiting a memory effect is achieved in cases where the ferroelectric liquid crystal light-modulating device is capable of generating two uniform zones abutting on the respective internal surfaces of the cell in which the molecules of liquid crystal are disposed almost in parallel with said surface (in Fig. 2 referred to as bistable region) and a zone sandwiched between said uniform zones in which the helical structure of the liquid crystal is formed (in Fig. 2 referred to as helix region) when the electric field is zero.

Regarding the further aspect, the display devices in personal computers, lap-top computers, information terminals, televisions, word processors, etc. can be of the structure adaptable to the simple matrix address system.

## BRIEF DESCRIPTION OF THE DRAWINGS

Fig. 1 is a diagram representing the relation between the elastic constant $B_1$ and the memory effect M, wherein as described later, the memory effect M is defined in Fig. 3 and its extent is expressed in terms of numerals ranging from 0 to 1.0.

Fig. 2(a) and (b) are schematic representation to illustrate the molecular alignment in Examples.

Fig. 3 shows diagrams representing a relation between the applied voltage pulse and the optical response.

Fig. 4 is a diagram representing a relation between spontaneous polarization and the elastic constant.

Fig. 5 is a schematic representation of the construction of a display device as an example of applications of the present light-modulating device.

Fig. 6(a) and (b) are also schematic representation to illustrate the molecular alignment in other Examples.

## DETAILED DESCRIPTION OF THE INVENTION

At first, mention will be made of the reason for the easy manifestation of memory effect in the device of this invention comprising a liquid crystal composition having a large value of $B_1$.

With the increase in the value of $B_1$, the deformation within each layer of the layered structure formed by the molecules of a ferroelectric liquid crystal becomes more difficult and the region, wherein the liquid crystal molecules orientate parallel to the molecules near the interfaces, reaches the middle part of the cell. An example of such a state is as shown in Fig. 2. Even if a helix 4 is formed in the middle part of the cell, each molecule in the regions having a certain thickness from both interfaces orientate approximately parallel to each other and uniformly. When each molecule has been reversed by the application of an electric field to establish uniform orientation throughout the whole region and then the electric field is removed, the helix configuration in the middle part of the cell is restored, but due to the large $B_1$ value the reversed spontaneous polarization remains uniformly in the above-mentioned regions having a certain thickness from both interfaces. Thus, because of the development of bistable memory effect in the regions having a certain thickness from both interfaces, it is possible to impart an optical contrast.

Next, the definition and the testing method for the above-mentioned elastic constant $B_1$ will be described.

Various theories heretofore been developed by using elastic constants defined, in most cases, with respect to deformation of the director (unit vector expressing the direction of longer molecular axis) based on the analogical reasoning derived from the case of nematic crystals. Three elastic constants defined with respect to splay, twist and bend deformations of director have been used and denoted, in most cases, by $K_1$, $K_2$ and $K_3$, respectively.

Such definitions, however, neglect the existence of layered structure and, in addition, do not allow each deformation to occur independently; moreover, there is no measuring means for such elastic constants.

As contrasted, in this invention, in view of the existence of layered structure and the experimental fact that varies switching take place at a constant tilt angle, use was made of elastic constants defined according to the deformation of C-director, which is a projection of the director on the layer surface. The elastic constants in splay, bend and twist deformations were denoted by $B_1$, $B_2$ and $B_3$, respectively, as in the above-mentioned conventional case. Such definitions lead to more definite physical meanings. Further, both $B_1$ and $B_2$ relate to deformations which take place within a layer and are of the nearly same value. Therefore, it is sufficient for the material parameters to obtain only two elastic constants $B_1$ ($\fallingdotseq B_2$) and $B_3$.

Of the two elastic constants, $B_3$ can be obtained by measuring the angle $\beta$ between layer normal and optic axis of the conoscopic pattern under application of a DC electric field in parallel with the layers in a perpendicularly oriented cell (each layer being parallel to the base plates). When the deformation is small enough, the following equation holds between the elastic constant $B_3$ and the angle $\beta$:

$$B_3 = \frac{Ps \cdot E \cdot \ell_o^2 \tan\theta}{8\pi^2 \beta}$$

where Ps is spontaneous polarization, E is the applied electric field, $\ell_o$ is helical pitch, and $\theta$ is tilt angle. Ps is obtained by the method of Sawer and Tower, $\ell_o$ by the direct observation under a polarizing microscope, and $\theta$ by the measurement of extinction angle when the cell is placed between crossed Nicols under application of positive and negative DC voltages to the liquid crystal. When $\ell_o$ is less than 1 $\mu$m (resolving power of the microscope), it can be obtained by dividing the characteristic reflection wavelength by the mean refractive index, i.e. 1.6, the former being obtained from the transmission spectrum of a perpendicularly oriented cell.

As for $B_1$, it is obtained by measuring the critical cell thickness, dc, for the commencement of disappearance of helix in a parallel-oriented wedge cell (the layer being perpendicular to the base plates) and calculating from the equation:

$$B_1 = 4\,(dc/\ell_o)^2 \cdot B_3$$

where $B_3$ is a value obtained by the above-mentioned method.

Further, the present inventors experimentally examined the relationship between the elastic constant $B_1$ and other physical properties. The results obtained were as shown in Fig. 4. From Fig. 4 it was found that the following equation holds between $B_1$ and the spontaneous polarization Ps:

$$B_1 = A \cdot \sqrt{Ps}$$

where

$$A = 5.6 \times 10^{-9}\ (N\ C^{-\frac{1}{2}} \cdot m).$$

The reason for the fact that with the increase in Ps, the constant $B_1$ becomes larger may be explained by the assumption that the elastic field formed by spontaneous polarization acts to keep the C-director in the layer from deformation, thus contributing to the increase in $B_1$.

From the above relation, it is understandable that in order that $B_1$ conforms to the requirement, $B_1 > 1.0 \times 10^{-10}$ N, a material having a spontaneous polarization larger than $3.2 \times 10^{-4}$ C/m$^2$ should be employed. As a consequence, if the measurement of $B_1$ is difficult by some reason such as, for example, difficulty of perpendicular orientation, it is possible to estimate the value of $B_1$ from the measurement of spontaneous polarization. It was further confirmed experimentally that there is no correlation between the elastic constant $B_3$ in interlayer deformation and the spontaneous polarization Ps.

Now, in order to impart a memory effect by increasing the value of elastic constant $B_1$ of the ferroelectric liquid crystal composition, a composition with a large spontaneous polarization should be used. However, it is not necessary that all of the compounds constituting the composition have large spontaneous polarization. It is sufficient that at least one compound has a large spontaneous polarization. A specific

feature of the chemical structure of a compound having a large spontaneous polarization is such that there is generally no methylene or polymethylene group between the portion called "hard rod core" including aromatic rings and the asymmetric carbon atom (hereinafter the portion of the molecule between two aromatic rings at left and right extremities is referred to as hard rod core). An example of such chemical structure is as follows:

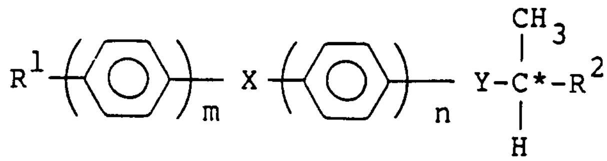

wherein $R^1$ is a $C_{6-10}$-alkyl or -alkoxy, $R_2$ is a $C_{4-10}$-alkyl, X is $-CO_2$, -OCO- or $-CH_2O$- and Y is O or $-CO_2$-; there is no methylene or polymethylene group; m and n are integers of 1 or 2.

Measured values of spontaneous polarization of particular compounds are as shown in Table 1. All of the compounds having a value larger than $3.2 \times 10^{-4}$ C/m$^2$ are commercially available for industrial use and can be adequately used in this invention. A compound having a larger value of spontaneous polarization is effective with smaller amount.

Table 1

| $R^1$ | m | n | X | Y | $R^2$ | Spontaneous polarization ($C/m^2$) |
|---|---|---|---|---|---|---|
| $C_6H_{13}O$ | 1 | 2 | OCO | O | $C_6H_{13}$ | $7.2 \times 10^{-4}$ |
| $C_8H_{17}O$ | " | " | " | " | " | $8.2 \times 10^{-4}$ |
| $C_{10}H_{21}O$ | " | " | " | " | " | $7.6 \times 10^{-4}$ |
| $C_8H_{17}O$ | " | " | " | " | $C_4H_9$ | $4.6 \times 10^{-4}$ |
| " | " | " | " | " | $C_5H_{11}$ | $7.4 \times 10^{-4}$ |
| " | " | " | " | " | $C_7H_{15}$ | $5.7 \times 10^{-4}$ |
| " | " | " | " | " | $C_8H_{17}$ | $3.2 \times 10^{-4}$ |
| " | " | " | " | " | $C_9H_{19}$ | $3.2 \times 10^{-4}$ |
| " | " | " | " | " | $C_{10}H_{21}$ | $3.4 \times 10^{-4}$ |
| " | " | " | $CO_2$ | $CO_2$ | $C_6H_{13}$ | $6.0 \times 10^{-4}$ |
| $C_7H_{15}O$ | " | " | $CH_2O$ | " | " | $14.0 \times 10^{-4}$ |
| $C_8H_{17}$ | 2 | 1 | OCO | O | " | $4.3 \times 10^{-4}$ |

Those compounds which have such a chemical structure, that is, the compounds of the above chemical structure in which there is no methylene or polymethylene group between the hard rod core and the asymmetric carbon atom, have a large latent spontaneous polarization even if they themselves do not assume a ferroelectric liquid crystal (SC*) phase. As a consequence, when added to a ferroelectric liquid crystal having a small spontaneous polarization, such compounds are capable of augmenting the spontaneous polarization.

The second feature, that is, that the light-modulating device has symmetric threshold characteristics is obtained effectively by using a ferroelectric liquid crystal composition which exhibits a phase sequence (the order of appearance of phases with temperature change) in which $S_A$ phase appears in a higher temperature side of an adjacent $S_C$* phase. Such an effect is closely associated with a treatment including the disposition of an oriented film such as, for example, polyimide film on the base plate and the application

of an action such as rubbing to the orientation-controlling films to enhance uniaxial orientation of the liquid crystal molecules.

In the orientation process of a material exhibiting a $S_A$ - $S_C$* phase sequence, at first in the course of transition of Ch phase or isotropic phase to SA phase the layered structure is formed while the long molecular axis being aligned in parallel with the rubbing direction. There is no need to apply an electric field. Then the material is slowly cooled to the $S_C$* phase, resulting in a switching element. In this process the long molecular axis tilts in two directions with the same probability and the stabilities of both bistable states become equivalent to each other. Otherwise, if there exists no $S_A$ phase in the higher temperature side of an adjacent $S_C$* phase, that is, the transition of Ch phase or isotropic phase to $S_C$* phase takes place, it is necessary to cool the material under application of a DC voltage. In this case the molecular orientation in parallel to the rubbing direction obtained by cooling becomes more stable, whereas the orientation obtained under application of reverse polarity is unstable.

Electro-optical characteristics were tested on a cell prepared by filling a composition exhibiting $S_A$ - $S_C$* phase sequence between two base plates which had been coated with an oriented film and then rubbed and arranged so that the rubbing direction of two plates become coincide or opposite to each other. The said treatment for the orientation was found satisfactory.

The other characteristic of the ferroelectric liquid crystal light-modulating device of this invention, the exhibition of a memory effect and the capability of being operated by a low driving voltage, that is, a low absolute threshold value, can be attained, as mentioned previously, by having the uniform zones abutting on the internal surfaces of the cell and with the helical structure sandwiched between said zones. In the case where the helical pitch formed in the central part of the cell is not necessarily even, that is, as shown in Fig. 6(a), the helical pitch may be uneven. Furthermore, the expected effects can be attained even only helical structure is formed partially as shown in Fig. 6(b) in the central part of the cell. That is, the consecutive formation of the helical structure is not always necessary. The absolute value of the threshold voltage becomes lower in the case in which the helical structure exists in the middle part of the cell as compared with the case wherein there is no helical structure for the following reason. The magnitude of torque in the switching of a ferroelectric liquid crystal is proportional to an inner product of the electric field vector and the spontaneous polarization vector. Theoretically the torque is zero in a nonhelical condition wherein the spontaneous polarization orientates perpendicularly to the interface to establish a uniform texture. In actuality, however, owing to thermal flucturation of the liquid crystal molecules or the non-uniform orientation, some torque appears momentarily or locally, thus providing nuclei for starting the switching but not to an extent sufficient to cause a large reduction in threshold voltage. As contrasted, when a helical structure exists in the middle part of cell, there is a region including the helical structure, wherein the electric field vector and the spontaneous polarization vector intersect at right angles and the torque becomes very large, thus providing nuclei to facilitate the switching even under application of low voltage.

In short, to achieve the above mentioned charateristic, which is the operation of the device under application of a low voltage, is easily provided by properly selecting and using a composition of this invention which facilitate the formation of helical structure in the middle part of the cell. As such compositions, there may be mentioned those containing the following compound which forms a helix having a pitch smaller than one-fifth of the cell thickness:

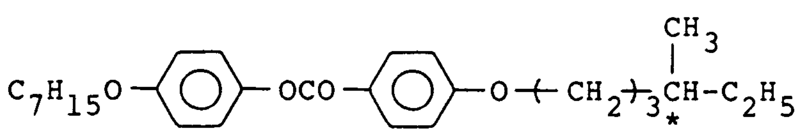

The helical pitch of this compound is 0.4 µm which is less than one-fifth of the thickness of a cell having a gap larger than 2 µm. It is possible to arouse a helical structure in the middle part of the cell by incorporating the above compound in the cell composition. It is also possible to make sure the occurrence of a helical structure by adding the above compound to the composition so that helical pitch of the composition may become less than one-fifth of the cell thickness.

To impart an optical contrast to the above device of this invention, it is possible to use a cell of the birefringence type constructed from two polarizing plates. However, such a type of cell is accompanied with technical difficulties such as unevenness in color unless the cell thickness is controlled with sufficient precision, and insufficient contrast unless the absolute value of cell thickness is kept at a proper level. To the contrary, a high contrast and evenness in color are secured by using a cell of the guest-host type incorporated with a polychromatic dye, provided that there is an ample volume of a region of uniform

orientation near the interface. Therefore, the element of this invention is more suited to the guest-host type. It is of course allowable to use a color filter.

The display device of this invention which utilizes the ferroelectric liquid crystal light-modulating device of this invention is constructed, for example, from a liquid crystal, light-polarizing means, transparent electrode, and base plate. The liquid crystal composition used in the device is characterized in that it exhibits such a phase sequence that a smectic A ($S_A$) phase appears in a higher temperature side of an adjacent ferroelectric phase (smectic C* phase); in the liquid crystal layer the deformation constant ($B_1$) of C-directer is $B_1 \geqq 1.0 \times 10^{-10}$ N and at the same time the spontaneous polarization is larger than $3.2 \times 10^{-4}$ C/m$^2$.

A portion of the middle part of the liquid crystal layer in the above light-modulating device should form such a helical structure that the helical axis is parallel to the base plate of the element at zero electric field. The display can be fabricated by assembling in a customary manner.

## Examples

Examples of the present invention are given below.

The evaluation of memory effect was performed by adding 3% by weight of a dichromatic color (LSB-235 of Mitsubishi Chemical Industries, Ltd.) to the composition. To the element provided with one polarizing plate, was applied a train of voltage (30 V) pulse of 2 milliseconds in width; the polarity was successively reversed with a zero volt interval of 200 milliseconds; the wave form was as shown in Fig. 3. Synchronously with the pulse train, the intensity of transmitted light (brightness T) through the element was measured. From the measurement of $T_1$, $T_2$, $T_3$ and $T_4$ shown in Fig. 3 the memory effect was calculated for convenience from the following equation:

$$M = (T_3/T_2-1)/(T_4/T_1-1)$$

According to this definition, with the increase in the value of M the memory effects becomes higher, the maximum value of M being 1 and the minimum value 0. The direction of the axis of polarizing plate was set so that $T_4/T_1$ may become maximum. The value of the applied voltage, 30 V, was sufficient for the complete switching of the liquid crystal.

## Example 1

The composition of the first aspect of this invention which conforms to $B_1 > 1.0 \times 10^{-10}$ N was used and the effect will be described. The results were as summarized in Fig. 1 and Table 1.

(1) Sample No. 1

Ferroelectric liquid crystal composition was prepared by using three compounds shown below.

A.

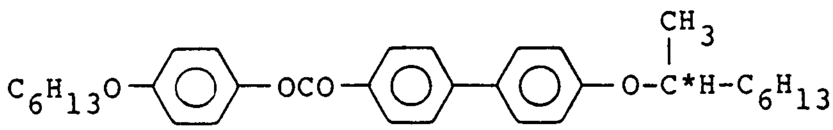

(24 mole %)

B

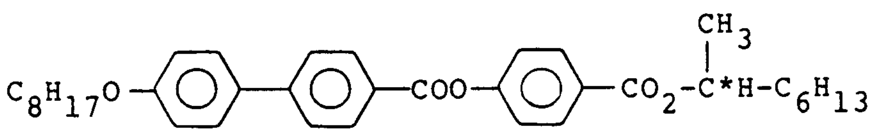

(20 mole %)

C.

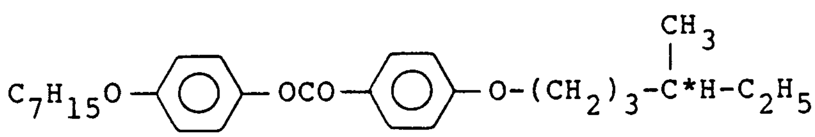

(56 mole %)

These compounds have respective antipodes but those having the same direction of spontaneous polarization were selected. Of these compounds, compound A had a spontaneous polarization of 8.3 x $10^{-4}$ C/$m^2$ and a helical pitch of 1.6 μm; compound C has a spontaneous polarization of less than 0.1 x $10^{-5}$ C/$m^2$ and a helical pitch of 0.4 μm.

The temperature range of the composition are

$$23^\circ C \overset{S_C^*}{\sim} 65^\circ C \overset{S_A}{\sim} 83^\circ C \overset{Ch}{\sim} 94^\circ C$$

The helical pitch, tilt angle, spontaneous polarization and elastic constant at 25°C were 0.4 μm, 27.5°, 4.1 x $10^{-4}$ C/$m^2$ and 1.0 x $10^{-10}$ N, respectively.

To the composition was added 3% by weight of a dichromatic color and filled a cell having a gap of 3.8 μm with the composition. Helical structure appeared partially in the cell and a good electro-optical memory effect was observed, the value of M being 1.0.

(2) Sample No. 2

Ferroelectric liquid crystal composition comprising the following 4 compounds:

A.

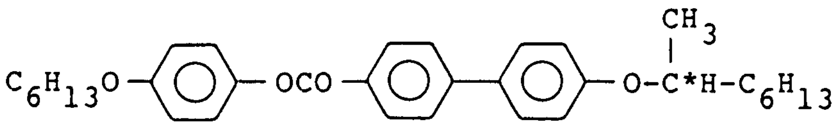

(36 mole %)

C.

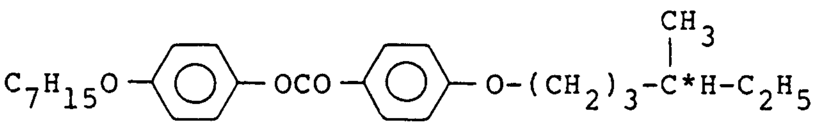

(36 mole %)

D

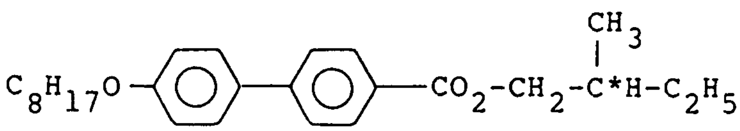

(18 mole %)

E.

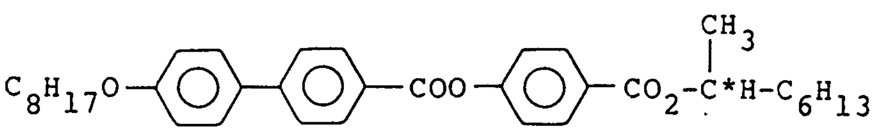

(10 mole %)

In the composition, 4 compounds having the same direction of spontaneous polarization were selected. The temperature range was

$$15°C \overset{Sc^*}{\sim} 62°C \overset{S_A}{\sim} 84°C \overset{Ch}{\sim} 90°C$$

The helical pitch, tilt angle, spontaneous polarization and elastic constant $B_1$ at 25 °C were 2.0 µm, 25 °, 5.3 x $10^{-4}$ C/m$^2$ and 1.4 x $10^{-10}$ N, respectively.

To the composition was added 3% by weight of a dichromatic color and a cell having a gap of 10 µm was filled with the composition. Helical structure appeared partially in the cell and a good memory effect was observed, the value of M being 1.0.

(3) Sample No. 3

A ferroelectric liquid crystal composition comprising the following 2 compounds:

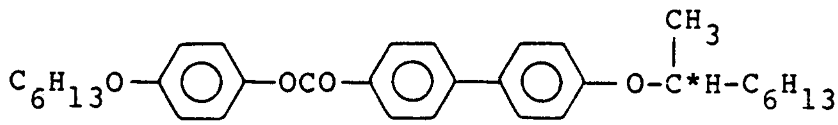

(80 mole %)

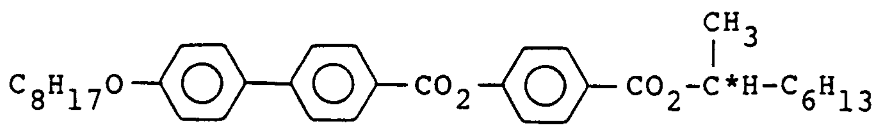

(20 mole %)

Both compounds showed the same direction of spontaneous polarization. The temperature ranges were as follows:

$$65^\circ C \overset{Sc^*}{\sim} 102^\circ C \overset{S_A}{\sim} 108^\circ C \overset{Ch}{\sim} 128^\circ C$$

The helical pitch, tilt angle, spontaneous polarization, and elastic constant $B_1$ at 92°C were 0.9 μm, 22°, $7.9 \times 10^{-4}$ $C/m^2$ and $1.3 \times 10^{-10}$ N, respectively.

To the composition was added 3% by weight of a dichromatic color and filled a cell having a gap of 8 μm with the composition. Helical structure appeared partially in the cell and a good memory effect was observed, the value of M being 1.0.

Comparative Example 1

(4) Sample No. 4

A ferroelectric liquid crystal composition comprising the following two compounds:

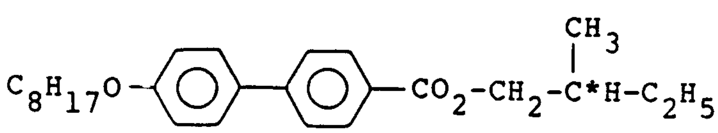

(50 mole %)

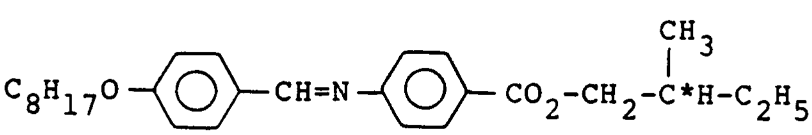

(50 mole %)

Both compounds showed the same direction of spontaneous polarization. The temperature ranges were as follows:

$$20^{\circ}C \overset{S_C*}{\sim} 34^{\circ}C \overset{S_A}{\sim} 54^{\circ}C$$

The helical pitch, tilt angle, spontaneous polarization, and elastic constant at 22°C were 0.7 µm, 22°, 6.2 x $10^{-5}$ C/$m^2$, and 0.5 x $10^{-10}$ N, respectively.

To the composition was added 3% by weight of a dichromatic color and filled a cell having a gap of 4 µm with the composition. Helical structure appeared partially. Entirely no electro-optical memory effect was observed, the value of M being O.

(5) Sample No. 5

A ferroelectric liquid crystal composition comprising the following 4 compounds:

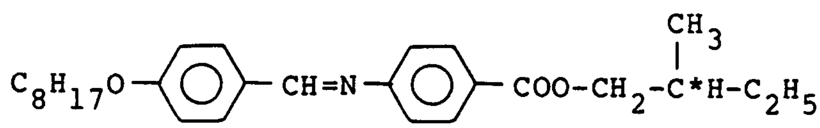

(21 mole %)

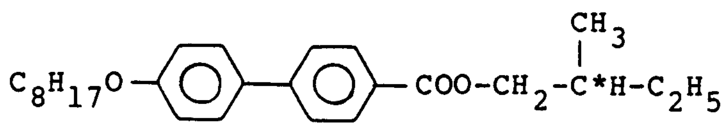

(21 mole %)

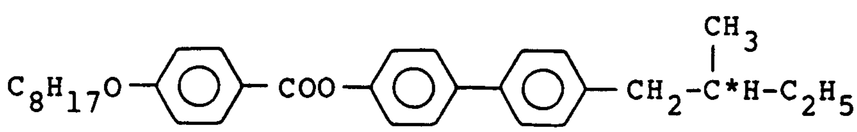

(29 mole %)

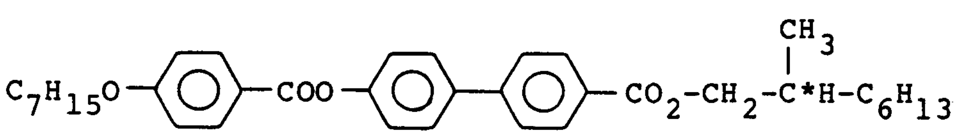

(29 mole %)

The temperature ranges of the composition were as follows:

$$<0^{\circ}C \overset{S_C*}{\sim} 52^{\circ}C \overset{S_A}{\sim} 118^{\circ}C$$

The helical pitch, tilt angle, spontaneous polarization and elastic constant $B_1$ at 22°C were 1.6 µm, 19°, 5 x $10^{-5}$ C/$m^2$ and 0.1 x $10^{-10}$ N, respectively.

To the composition was added 3% by weight of a dichromatic color and filled a cell having a gap of 11 μm with the composition. Helical structure appeared partially. Entirely no electro-optical effect was observed, the value of M being 0.

As is apparent from Example 1 and Comparative Example 1, the memory effect was developed when the elastic constant $B_1$ was larger than $0.5 \times 10^{-10}$ N.

Table 2

| Sample No. | Phase sequence | Elastic Constant $B_1$ | Helix | Memory effect M |
|---|---|---|---|---|
| 1 | SA·SC* | $1.0 \times 10^{-10}$ N | Remain | 1.0 |
| 2 | " | 1.4x " | " | 1.0 |
| 3 | " | 1.3x " | " | 1.0 |
| 4 | " | 0.5x " | " | 0 |
| 5 | " | 0.1x " | " | 0 |

Example 2

The effect obtained by using a composition of the second aspect of this invention, which exhibits a $S_A$ - $S_C^*$ phase sequence, will be disclosed below.

The same ferroelectric liquid crystal composition and the same cell as those described in Example 1 were used. To the composition was applied a train of voltage pulses of 2 milliseconds in width with varied voltage and the threshold electric field $E_{th}^+$ and $E_{th}^-$were determined. $E_{th}^+$ and $E_{th}^-$ mean the switching from dark to light and the switching from light to dark, respectively and are expressed in absolute values. The degree of symmetry of threshold values was evaluated by the ratio $E_{th}^+/E_{th}^-$. In the present Example this ratio was 1.04.

Comparative Example 2

Compounds shown below were used:

A. 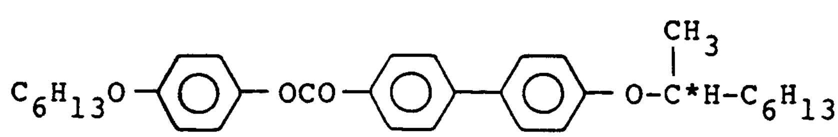

The temperature range of the compound was

$$71°C \overset{Sc^*}{\sim} 98°C \overset{Ch}{\sim} 123°C$$

The helical pitch, tilt angle, and spontaneous polarization at 88 °C were 1.5 µm, 34 ° and 8.3 x $10^{-4}$ C/$m^2$, respectively.

Although the elastic constant $B_1$ could not be determined owing to lack of perpendicular orientation, it was estimated to be larger than 1.3 x $10^{-10}$ N by the extrapolation of the values obtained from the measurement performed on the compositions incorporated with 10 mole % and 20 mole % of the following compound

B.

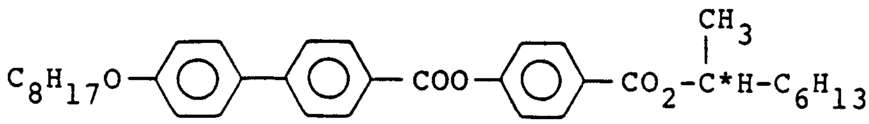

To this composition was added 3% by weight of a dichromatic color and filled a cell having a gap of 11 µm with the composition.

The uniformly oriented state was obtained by applying 20 V DC voltage to the composition during the course of cooling from Ch phase to $S_C$* phase. A helical structure was developed partially in the cell and a good electro-optical memory effect was observed, the value of M being 1.0.

Then $E_{th}^+/E_{th}^-$ was measured in the same manner as in Example 1. As a result it was found that the threshold value obtained by applying an electric field of the same polarity as that of the electric field applied to cause orientation was distinctly lower than that obtained by applying an electric field of the reverse polarity, and the degree of symmetry was 2.5 which showed a very low degree of symmetry as compared with the case of $S_A$ - $S_C$* phase sequence; this result showed a defect such that on-off operation with the same driving voltage is impossible.

Example 3 and Comparative Example 3

The effect of the existence of helical structure in the middle part of cell will be described. The results were as summarized in Table 3.

Example 3

(6) Sample No. 6: The same material as that of sample No. 1 was used. The value of $E_{th}$ obtained was 0.75 x $10^{-6}$ V•$m^{-1}$.

(7) Sample No. 7: the same material as that of sample No. 2 was used. The value of $E_{th}$ obtained was 0.45 x $10^{-6}$ V•$m^{-1}$.

Comparative Example 3

(8) Sample No. 8: The conditions were nearly the same as in the case of sample No. 1, but only the cell gap was reduced to 3.0 µm. As a result, the helical structure disappeared and the threshold electric field $E_{th}$ increased to 1.73 x $10^{-6}$ V•$m^{-1}$.

(9) Sample No. 9: The conditions were nearly the same as in the case of sample No. 7, but only the cell gap was reduced to 3.4 µm. As a result, the helical structure disappeared and the threshold electric field also increased to 0.62 x $10^{-6}$ V•$m^{-1}$.

Table 3

| | Sample No. | Phase sequence | Elastic constant $B_1$ | Helix | Threshold value $E_{th}$ ($V \cdot m^{-1}$) |
|---|---|---|---|---|---|
| Example 3 | 6 | $S_A \cdot S_C$* | $1.0 \times 10^{-10}$ N | Remain | $0.75 \times 10^{-6}$ |
| | 7 | " | 1.4 " | " | 0.45 " |
| Comparative Example 3 | 8 | " | 1.0 " | Vanish | 1.73 " |
| | 9 | " | 1.4 " | " | 0.62 " |

From the above results of Example 3 and Comparative Example 3 it was confirmed that the existence of helical structurel exhibits an effect of reducing the threshold electric field $E_{th}$.

According to this invention it is possible to provide an element having a stable memory effect even if the cell gap exceeds 3 μm; it is also possible to provide an element of low driving voltage by imparting symmetric threshold characteristics.

## Claims

1. A ferroelectric liquid crystal light-modulating device comprising:
a first and a second base plate at least one of which is transparent arranged substantially parallel and opposite to each other, leaving a gap between each other;
a transparent electrode structure deposited on the inward facing surface of each of said first and second base plates;

a ferroelectric liquid crystal composition in the chiral smectic C ($S_C$*) phase confined between said first and second base plates, said liquid crystal composition exhibiting a smectic A phase in a temperature range directly above the temperature range of the chiral smectic C phase;
a polariser deposited on the outward looking surface of said transparent base plate;
characterized in that
the deformation constant B1 of the C-director in the liquid crystal layer is larger than or equal to 1.0 x $10^{-10}$ N and the value of the spontaneous polarisation is larger than 3.2 x $10^{-4}$ C/$m^2$,
such that when no electric field is applied said liquid crystal layer forms three layers parallel to said surfaces of the base plates and the liquid crystal molecules in each of the outer layers being disposed substantially in parallel with said surfaces.

**2.** A device according to claim 1 wherein the ferroelectric liquid crystal composition contains at least one ferroelectric liquid crystal compound having a helical pitch smaller than one-fifth of the cell gap, therefore allowing the liquid crystal molecules in the middle layer to form a helical structure when no electrical field is applied.

**3.** A device according to claim 1 or 2, wherein the gap is larger than 3 μm.

**4.** A device according to any of claims 1 to 3, wherein the inward facing surface of each of the base plates is provided with an orientation-controlling coating.

**5.** A device according to claim 4, wherein the orientation-controlling coatings have been subjected to rubbing.

**6.** A device according to claim 4 or 5, wherein the orientation-controlling coating is a coating of a polymer of the polyimide type.

**7.** A device according to any of claims 1 to 6, wherein the ferroelectric liquid crystal composition comprises a polychromatic dye.

**8.** A device according to any of claims 1 to 7, wherein the ferroelectric liquid crystal compound has a chemical structure such that there is no methylene or polymethylene group between the portion called hard rod core which contains an aromatic ring, and the asymmetric carbon atom.

**9.** A device according to claim 8, wherein the ferroelectric liquid crystal compound is a compound represented by the formula

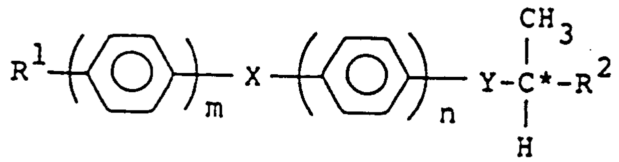

[I]

wherein $R^1$ is a $C_{6-10}$-alkyl or -alkoxy, $R^2$ is a $C_{4-10}$-alkyl, X is -$CO_2$-, -OCO, or -$CH_2O$-, Y is -O- or -$CO_2$-, and m and n are an integer of 1 or 2.

**10.** A device according to claim 9, wherein the compound represented by the formula [I] is,

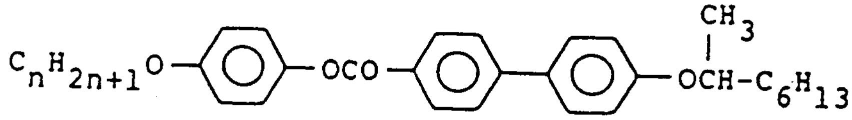

and/or

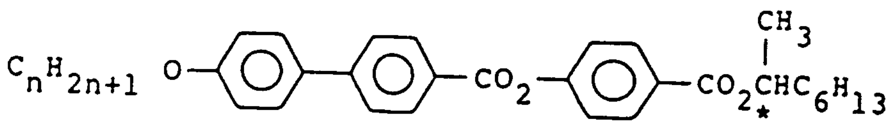

wherein n is an integer of 6 to 10.

**11.** A device according to claim 2, wherein the spontaneous polarization of the ferroelectric liquid crystal compound having a helical pitch smaller than one-fifth of cell gap is below $3.2 \times 10^{-4}$ $C/m^2$.

**12.** A device according to claim 11, wherein the ferroelectric liquid crystal compound is represented by the formula

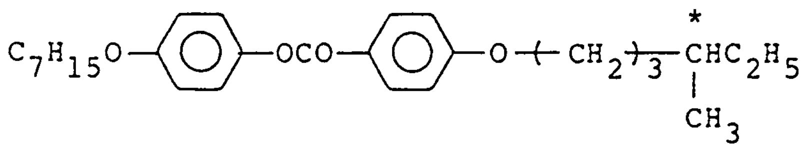

## Patentansprüche

**1.** Ferroelektrischer Flüssigkristall-Lichtmodulator, welcher umfaßt:
Eine erste und zweite Grundplatte, von denen mindestens eine transparent ist, welche im wesentlichen parallel und einander gegenüber angeordnet sind und einen Zwischenraum zwischen sich lassen;
eine transparente Elektroden-Struktur, welche auf der nach innen gerichteten Oberfläche der jeweiligen ersten und zweiten Grundplatte aufgebracht ist;
eine ferroelektrische Flüssigkristall-Zusammensetzung in der chiralen smektischen C ($S_C$*)-Phase, welche zwischen der ersten und zweiten Grundplatte eingeschlossen ist und welche eine smektische A-Phase in einem Temperaturbereich direkt oberhalb des Temperaturbereichs der chiralen smektischen C-Phase aufweist;
einen Polarisator, welcher auf der nach außen gerichteten Oberfläche der transparenten Grundplatte aufgebracht ist;
dadurch gekennzeichnet, daß
die Deformationskonstante B1 des C-Direktors in der Flüssigkristall-Schicht größer als oder gleich $1{,}0 \times 10^{-10}$ N ist und der Wert der spontanen Polarisation größer als $3{,}2 \times 10^{-4}$ $C/m^2$ ist, und daß,
wenn kein elektrisches Feld angelegt ist, die Flüssigkristall-Schicht drei Schichten bildet, welche parallel zu den Oberflächen der Grundplatten verlaufen und die Flüssigkristallmoleküle in jeder der äußeren Schichten im wesentlichen parallel zu den Oberflächen angeordnet sind.

**2.** Vorrichtung gemäß Anspruch 1, worin die ferroelektrische Flüssigkristall-Zusammensetzung mindestens eine ferroelektrische Flüssigkristall-Verbindung mit einer helikalen Ganghöhe kleiner als ein Fünftel des Zwischenraums der Zelle enthält, wodurch ermöglicht wird, daß die Flüssigkristall-Moleküle in der mittleren Schicht eine helikale Struktur ausbilden, wenn kein elektrisches Feld angelegt ist.

**3.** Vorrichtung gemäß Anspruch 1 oder 2, worin der Zwischenraum größer als 3 mm ist.

**4.** Vorrichtung gemäß einem der Ansprüche 1 bis 3, worin die nach innen gerichtete Oberfläche jeder Grundplatte mit einer Beschichtung zur Steuerung der Orientierung versehen ist.

**5.** Vorrichtung gemäß Anspruch 4, worin die Beschichtungen zur Steuerung der Orientierung einer Reibbehandlung (rubbing) unterzogen wurden.

**6.** Vorrichtung gemäß Anspruch 4 oder 5, worin die Beschichtung zur Steuerung der Orientierung eine Beschichtung aus einem Polymer vom Polyimid-Typ ist.

7. Vorrichtung gemäß einem der Ansprüche 1 bis 6, worin die ferroelektrische Flüssigkristall-Zusammensetzung einen polychromatischen Farbstoff enthält.

8. Vorrichtung gemäß einem der Ansprüche 1 bis 7, worin die ferroelektrische Flüssigkristall-Verbindung eine chemische Struktur aufweist, in der sich keine Methylen- oder Polymethylengruppe zwischen dem als "steifer stabförmiger Kern" (hard rod core) bezeichneten Anteil, welcher einen aromatischen Ring enthält, und dem asymetrischen Kohlenstoffatom befindet.

9. Vorrichtung gemäß Anspruch 8, worin die ferroelektrische Flüssigkristall-Verbindung eine durch die Formel

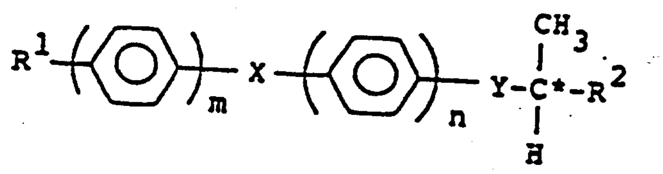

[I]

dargestellte Verbindung ist,

worin $R^1$ $C_{6-10}$-Alkyl oder -Alkoxy, $R^2$ $C_{4-10}$-Alkyl, X $-CO_2-$, -OCO- oder $-CH_2O-$ ist, Y -O- oder $-CO_2-$ ist, und m und n ganze Zahlen von 1 oder 2 sind.

10. Vorrichtung gemäß Anspruch 9, worin die durch die Formel [I] dargestellte Verbindung

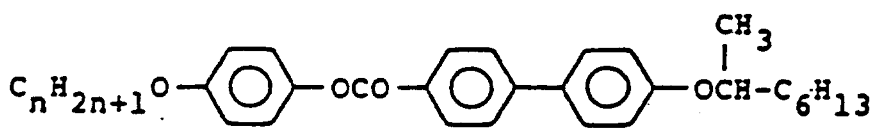

und/oder

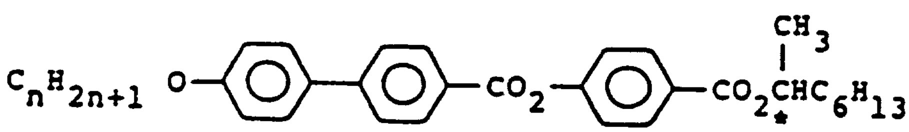

ist, worin n eine ganze Zahl von 6 bis 10 ist.

11. Vorrichtung gemäß Anspruch 2, worin die spontane Polarisation der ferroelektrischen Flüssigkristall-Verbindung mit einer helikalen Ganghöhe von kleiner als ein Fünftel des Zellenzwischenraums unterhalb von 3,2 x $10^{-4}$ $C/m^2$ beträgt.

12. Vorrichtung gemäß Anspruch 11, worin die ferroelektrische Flüssigkristall-Verbindung durch die Formel

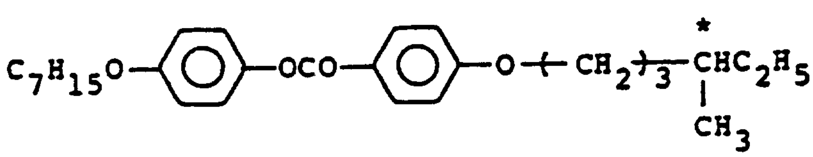

dargestellt ist.

## Revendications

**1.** Dispositif modulateur de lumière à cristaux liquides ferroélectrique comprenant:
une première et une seconde plaques de base, dont au moins une est transparente, disposées sensiblement parallèlement et opposées entre elles, laissant un intervalle entre elles;
une structure d'électrode transparente déposée à la surface regardant vers l'intérieur de chacune desdites première et seconde plaques de base;
une composition de cristal liquide ferroélectrique en phase smectique C chirale ($S_C$ *) confinée entre lesdites première et seconde plaques de base, ladite composition de cristal liquide présentant une phase smectique A dans un intervalle de température directement supérieur à l'intervalle de température de la phase smectique C chirale;
un polariseur déposé à la surface regardant vers l'extérieur de ladite plaque de base transparente;
caractérisé en ce que
la constante de déformation B1 du directeur C dans la couche de cristal liquide est supérieure ou égale à 1,0 x $10^{-10}$ N et la valeur de la polarisation spontanée est supérieure à 3,2 x $10^{-4}$ C/$m^2$,
de manière que lorsqu'on n'applique pas de champ électrique, ladite couche de cristal liquide forme trois couches parallèles auxdites surfaces des plaques de base et les molécules de cristal liquide dans chacune des couches externes sont disposées sensiblement en parallèle avec lesdites surfaces.

**2.** Dispositif selon la revendication 1 dans lequel la composition de cristal liquide ferroélectrique contient au moins un composé de cristal liquide ferroélectrique ayant un pas de spire inférieur à un cinquième de l'intervalle cellulaire, permettant donc aux molécules de cristal liquide dans la couche intermédiaire de former une structure hélicoïdale lorsqu'aucun champ électrique n'est appliqué.

**3.** Dispositif selon la revendication 1 ou 2, dans lequel l'intervalle est supérieur à 3 $\mu$m.

**4.** Dispositif selon l'une quelconque des revendications 1 à 3, dans lequel la surface regardant vers l'intérieur de chacune des plaques de base est munie d'un revêtement régulant l'orientation.

**5.** Dispositif selon la revendication 4, dans lequel les revêtements régulant l'orientation ont été soumis à un frottement.

**6.** Dispositif selon la revendication 4 ou 5 dans lequel le revêtement régulant l'orientation est un revêtement d'un polymère du type polyimide.

**7.** Dispositif selon l'une quelconque des revendications 1 à 6 dans lequel la composition de cristal liquide ferroélectrique comprend un colorant polychromatique.

**8.** Dispositif selon l'une quelconque des revendications 1 à 7 dans lequel le composé de cristal liquide ferroélectrique a une structure chimique telle qu'il n'y a pas de groupe méthylène ou polyméthylène entre la partie appelée "coeur de bâtonnet dur" qui contient un noyau aromatique, et l'atome de carbone asymétrique.

**9.** Dispositif selon la revendication 8, dans lequel le composé de cristal liquide ferroélectrique est un composé représenté par la formule

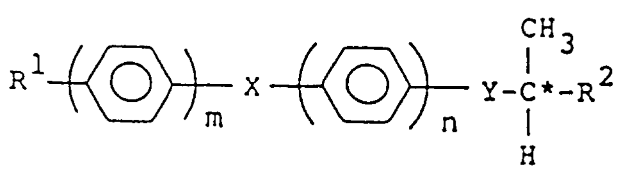

[ I ].

dans laquelle $R^1$ est un radical alcoyle ou alcoxy en $C_6$ à $C_{10}$, $R^2$ est un radical alcoyle en $C_4$ à $C_{10}$,X représente $-CO_2-$ , -OCO ou $-CH_2O-$ , Y représente -O- ou $-CO_2-$ , et m et n sont des nombres entiers valant 1 ou 2.

**10.** Dispositif selon la revendication 9, dans lequel le composé représenté par la formule (I) est

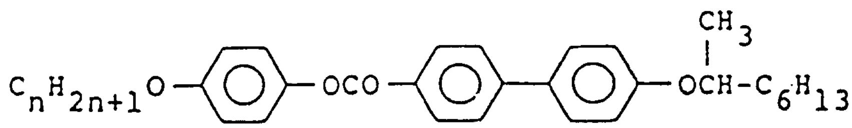

et/ou

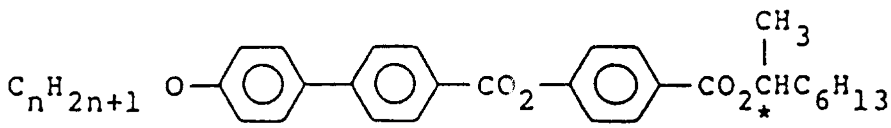

où n est un nombre entier valant de 6 à 10.

**11.** Dispositif selon la revendication 2, dans lequel la polarisation spontanée du composé de cristal liquide ferroélectrique ayant un pas de spire inférieur à un cinquième de l'intervalle cellulaire est inférieure à $3{,}2 \times 10^{-4}$ C/m$^2$.

**12.** Dispositif selon la revendication 11, dans lequel le composé de cristal liquide ferroélectrique est représenté par la formule

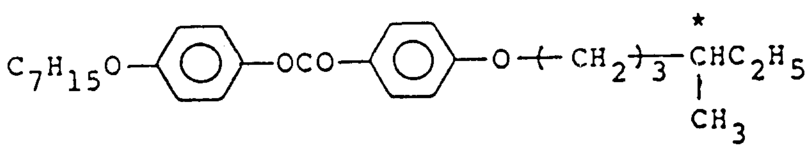

FIG. 1

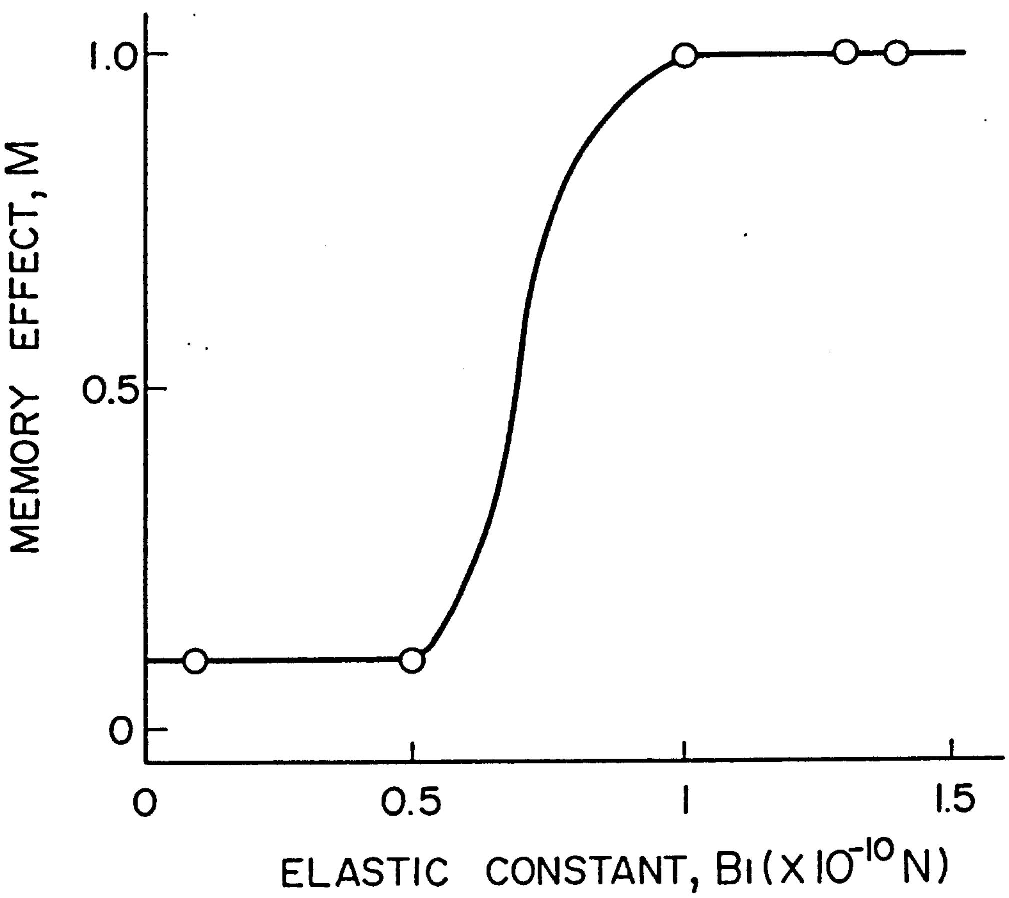

FIG. 2

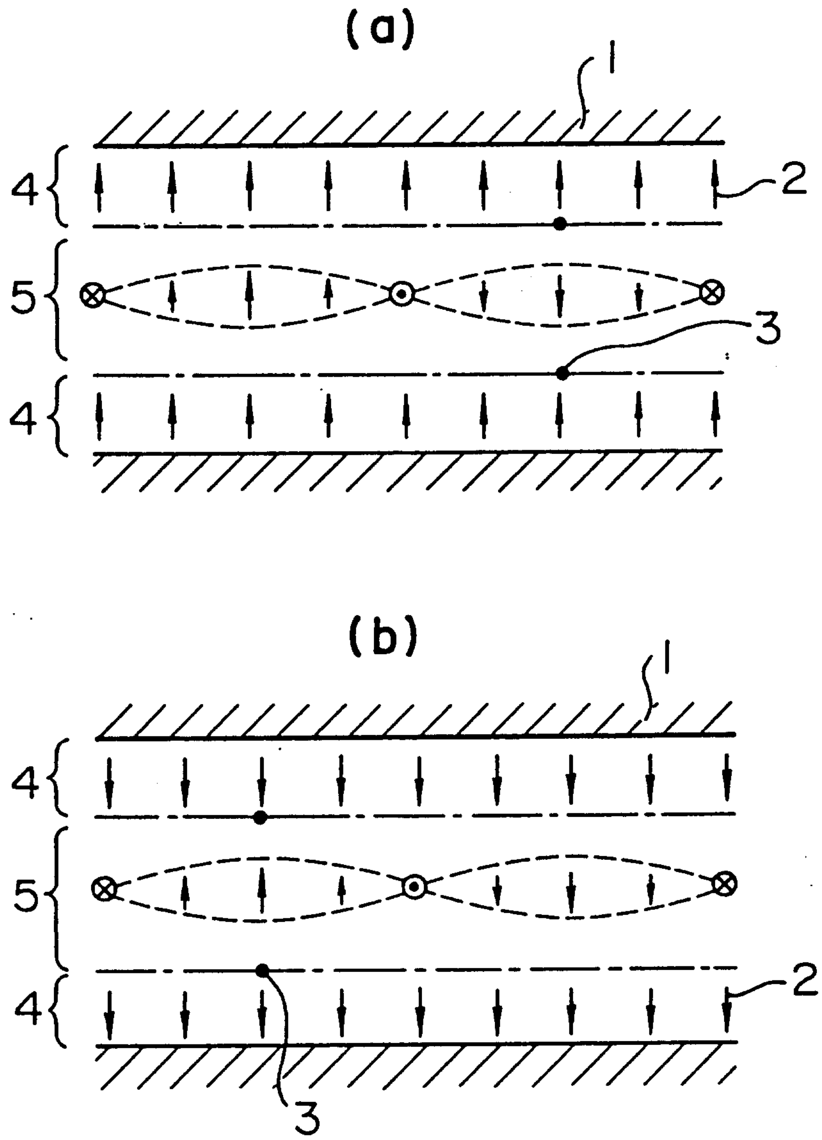


1: GLASS BASE PLATE
2: SPONTANEOUS POLARIZATION
3: DISCLINATION LINE
4: BISTABLE REGION
5: HELIX REGION

FIG. 3

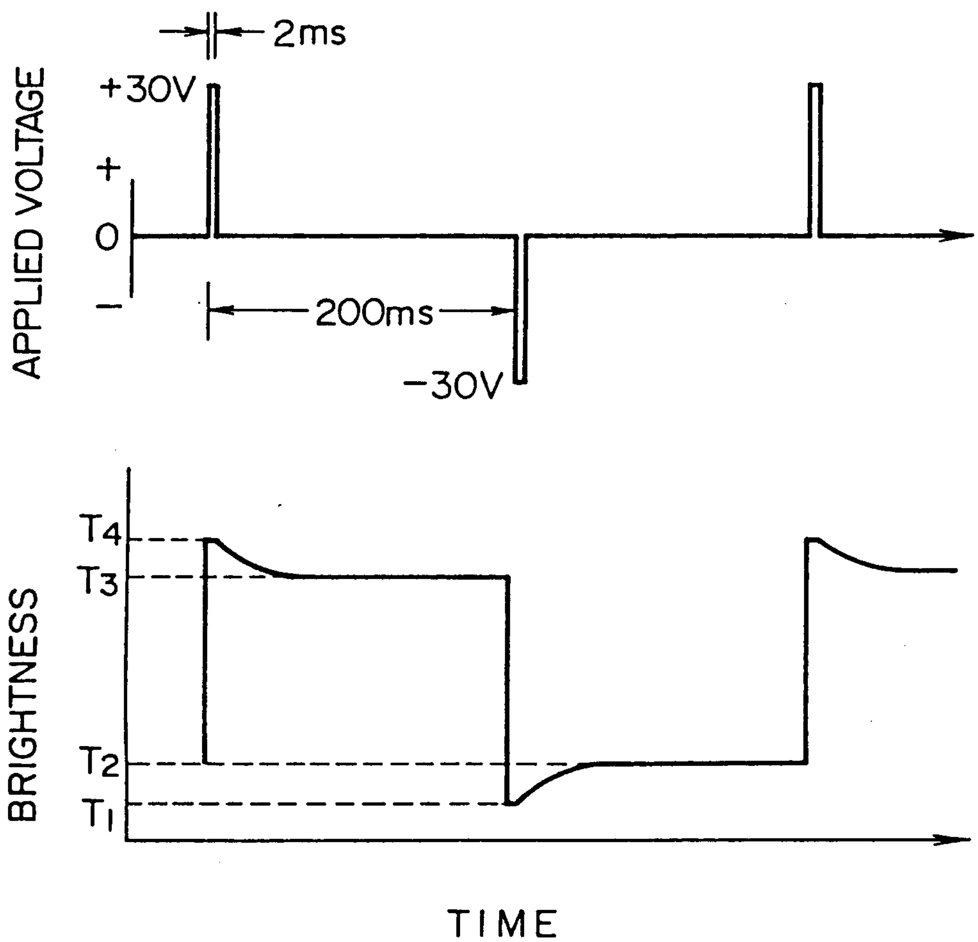
2ms
APPLIED VOLTAGE
+30V
+
0
−
200ms
−30V
BRIGHTNESS
T4
T3
T2
T1
TIME

FIG. 4

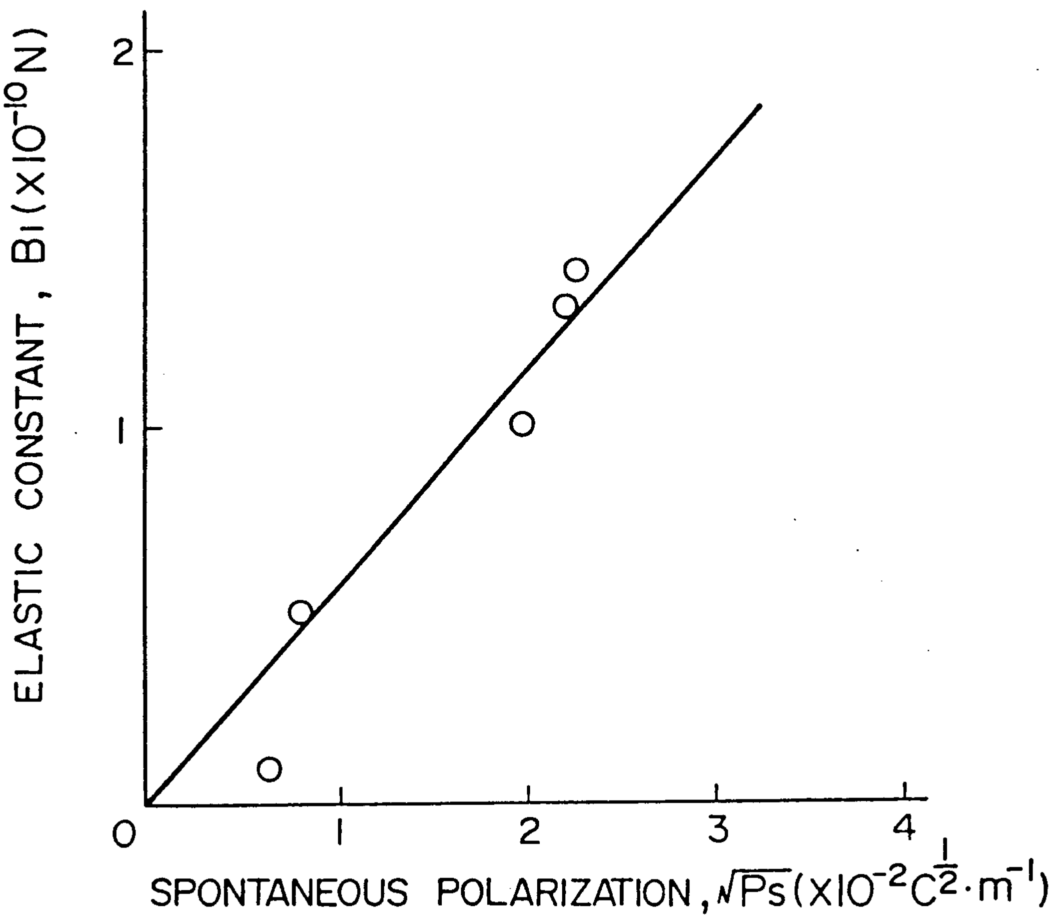
ELASTIC CONSTANT, B1 (X10^-10 N)
2
1
0
1
2
3
4
SPONTANEOUS POLARIZATION, √Ps (X10^-2 C^1/2 · m^-1)

F I G. 5

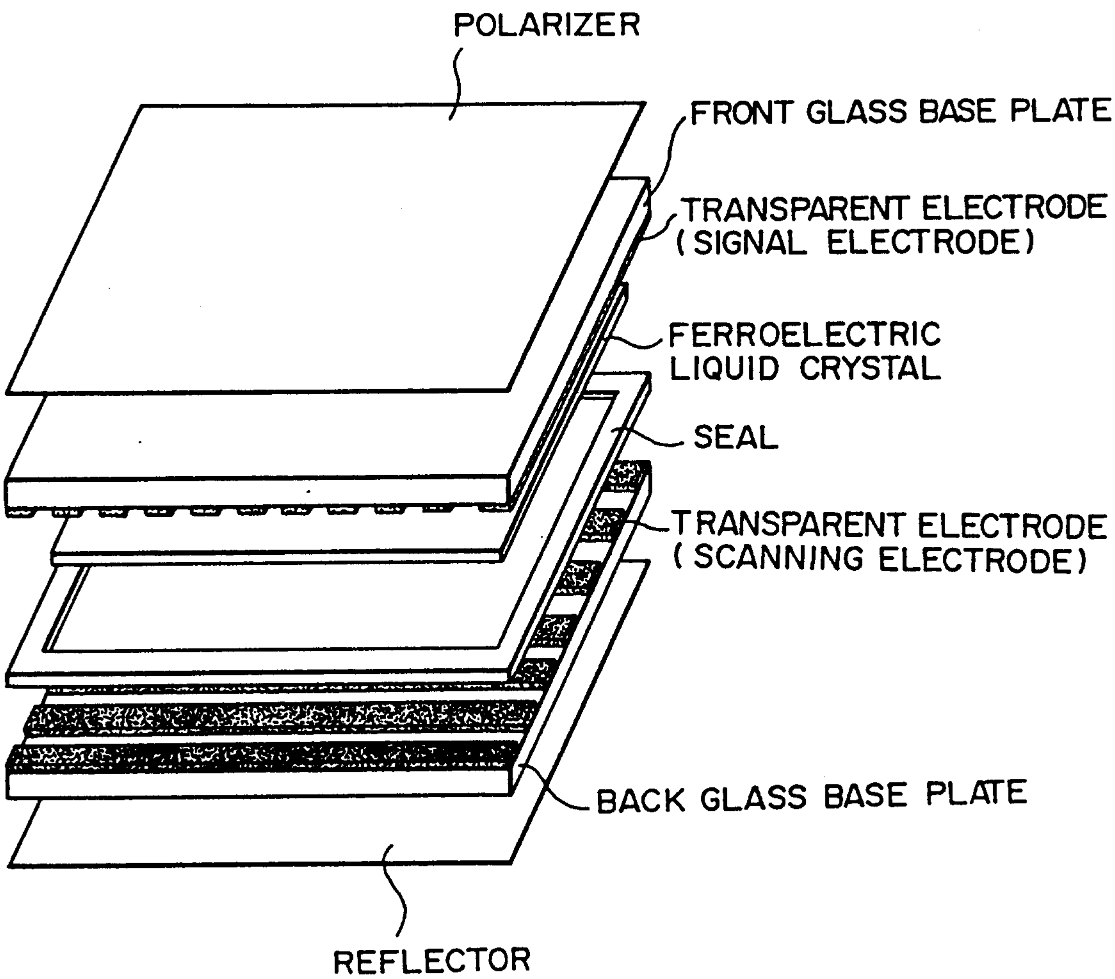
POLARIZER
FRONT GLASS BASE PLATE
TRANSPARENT ELECTRODE
(SIGNAL ELECTRODE)
FERROELECTRIC
LIQUID CRYSTAL
SEAL
TRANSPARENT ELECTRODE
(SCANNING ELECTRODE)
BACK GLASS BASE PLATE
REFLECTOR

FIG. 6

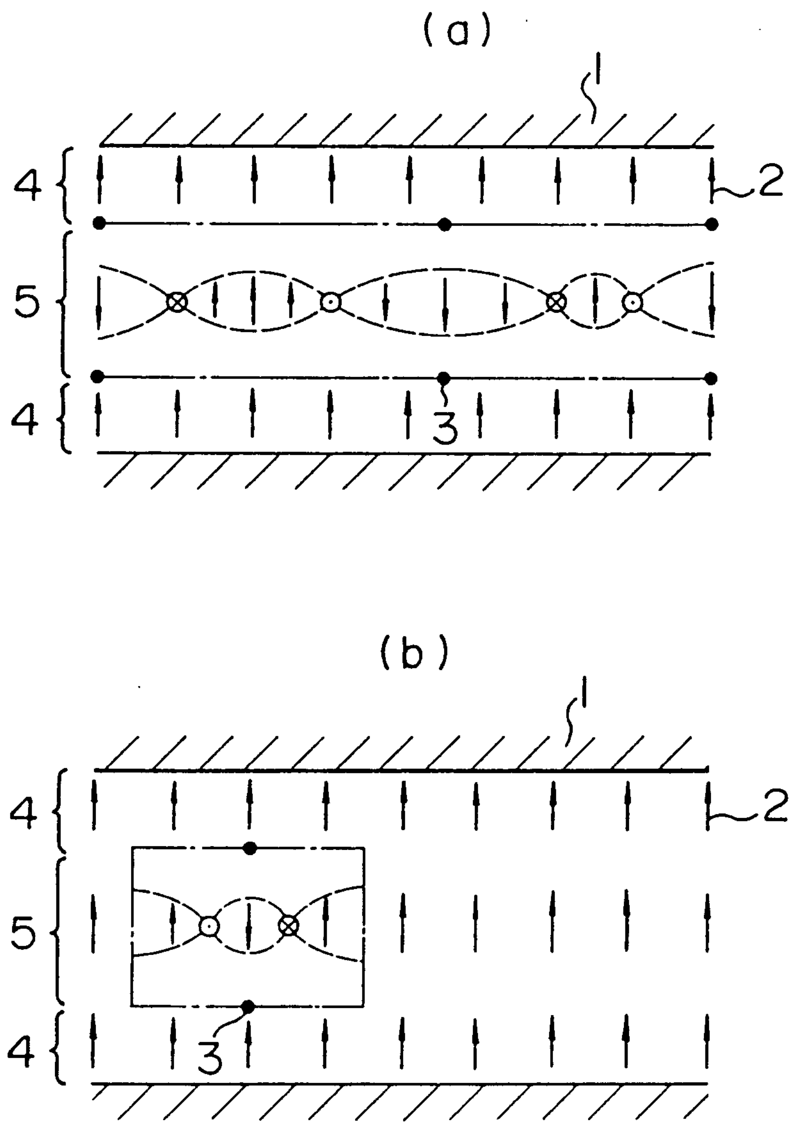


1: GLASS BASE PLATE
2: SPONTANEOUS POLARIZATION
3: DISCLINATION LINE
4: BISTABLE REGION
5: HELIX REGION